# DEMANDE DE BREVET EUROPEEN

(11) **EP 2 530 404 A2**
(43) Date de publication de la demande: **05.12.2012**
(21) Numéro de dépôt: 12168803.0
(22) Date de dépôt: 22.05.2012
(51) Int. Cl.: F24J 2/52, F24J 2/46, H01L 31/042, E04D 13/18

(54) **Dispositif de couverture modulaire**

(30) Priorité: 31.05.2011 FR 1154782
(71) Demandeur: All Star Corporation Limited, Mongkok Kln, Hong Kong (CN)
(72) Inventeur: Claquin, Ronan, 29710 Plozevet (FR)
(74) Mandataire: Loyer & Abello

(57) **Abrégé**

Un dispositif de couverture modulaire comporte des rails de fixation (2) espacés parallèles fixés sur une structure porteuse (3) à couvrir et des panneaux collecteurs de lumière (1) agencés sous la forme d'au moins une rangée de panneaux (4) montée entre deux rails de fixations. Un panneau comporte à chaque fois un cadre quadrilatère (5) et une plaque collectrice de lumière (6), le cadre comportant à chaque fois deux pièces longitudinales (9), une première pièce de bord (60), et une deuxième pièce de bord (40). La première pièce de bord (60) comporte à chaque fois une plaque de recouvrement agencée à l'opposé de la structure porteuse (3) et faisant saillie vers l'extérieur du cadre parallèlement à la plaque collectrice (6). Dans un état d'alignement des deux panneaux de la rangée de panneaux (4), la plaque de recouvrement (70) du deuxième panneau (1) recouvre la deuxième pièce de bord (40) du premier panneau (1).

## Description

L'invention se rapporte au domaine des dispositifs de couverture modulaires, notamment pour la couverture d'un toit, permettant de réaliser des agencements de panneaux collecteurs de lumière sur des surfaces plus ou moins étendues, par exemple pour la construction d'une verrière, d'un collecteur de chaleur solaire ou d'une installation photovoltaïque.

Selon un mode de réalisation, l'invention fournit un dispositif de couverture modulaire, notamment pour la couverture d'un toit, comportant
des rails de fixations espacés parallèles fixés sur une structure porteuse à couvrir,
et des panneaux collecteurs de lumière agencés sous la forme d'au moins une rangée de panneaux montée entre deux rails de fixations, un panneau comportant à chaque fois un cadre quadrilatère et une plaque collectrice de lumière fixée de manière étanche dans le cadre, le cadre comportant à chaque fois
deux pièces longitudinales agencées parallèlement aux rails de fixation et aptes à être fixées respectivement aux deux rails de fixation associés à la rangée de panneaux,
une première pièce de bord reliant les deux pièces longitudinales au niveau d'une première extrémité des pièces longitudinales, et
une deuxième pièce de bord reliant les deux pièces longitudinales au niveau d'une deuxième extrémité des pièces longitudinales,
dans lequel la première pièce de bord comporte à chaque fois une plaque de recouvrement agencée à l'opposé de la structure porteuse et faisant saillie vers l'extérieur du cadre parallèlement à la plaque collectrice, et
la deuxième pièce de bord comporte à chaque fois une surface d'appui destinée à recevoir la plaque de recouvrement d'un deuxième panneau de la rangée de panneaux, de manière que la plaque de recouvrement du deuxième panneau recouvre complètement ou partiellement la deuxième pièce de bord du premier panneau dans un état d'alignement des deux panneaux de la rangée de panneaux.

Selon des modes de réalisation avantageux, un tel dispositif de couverture peut présenter une ou plusieurs des caractéristiques suivantes.

Selon un mode de réalisation, la première pièce de bord et la deuxième pièce de bord comportent des moyens de butée complémentaires délimitant un jeu longitudinal de coulissement du deuxième panneau par rapport au premier panneau, les moyens de butée définissant une position de rapprochement maximal et une position d'éloignement maximal des panneaux dans l'état d'alignement des deux panneaux.

Selon un mode de réalisation, la deuxième pièce de bord comporte une gouttière faisant saillie vers l'extérieur du cadre, la gouttière présentant un côté ouvert tourné à l'opposé de la structure porteuse pour collecter une infiltration ou une condensation d'eau entre les deux pièces de bord, la longueur de la gouttière s'étendant jusqu'aux deux rails de fixation associés à la rangée de panneaux pour pouvoir déverser l'eau collectée sur les rails de fixation.

Selon un mode de réalisation, la gouttière de la deuxième pièce de bord comporte un rebord plat tourné à l'opposé de la structure porteuse et parallèle à la surface d'appui, la première pièce de bord comportant une surface d'appui tournée vers la structure porteuse apte à venir en appui sur le rebord plat dans l'état d'alignement des deux panneaux.

Selon un mode de réalisation, la surface d'appui de la première pièce de bord porte une nervure saillante parallèle à la gouttière qui est engagée dans la gouttière dans l'état d'alignement des deux panneaux, la nervure étant apte à coopérer avec le rebord plat de la gouttière pour définir une position d'éloignement maximal des panneaux dans l'état d'alignement des deux panneaux.

Selon un mode de réalisation, la deuxième pièce de bord comporte une gouttière secondaire agencée parallèlement à la première gouttière à un niveau intermédiaire entre la première gouttière et la surface d'appui de la deuxième pièce de bord, la gouttière secondaire comportant une ouverture tournée à l'opposé de la structure porteuse pour collecter une infiltration ou une condensation d'eau entre les deux pièces de bord et un rebord de débordement agencé au droit de l'ouverture de la première gouttière pour permettre un débordement d'eau depuis la gouttière secondaire dans la première gouttière.

Selon un mode de réalisation, la première pièce de bord comporte en outre deux parois parallèles espacées faisant saillie vers l'extérieur du cadre en-deçà de la plaque de recouvrement et définissant une gorge apte à recevoir le rebord de débordement de la gouttière secondaire dans l'état d'alignement des deux panneaux.

Selon un mode de réalisation, le rebord de débordement de la gouttière secondaire est apte à venir en butée au fond de la gorge de la première pièce de bord dans une position de rapprochement maximal des deux panneaux.

Selon un mode de réalisation, les deux parois parallèles de la première pièce de bord se terminent respectivement par un bec incliné venant au droit respectivement de l'ouverture de la première gouttière et de l'ouverture de la gouttière secondaire de la deuxième pièce de bord dans l'état d'alignement des deux panneaux.

Selon un mode de réalisation, un rail de fixation comporte à chaque fois un côté plan prenant appui sur la structure porteuse et un bossage central faisant saillie sur le côté opposé à la structure porteuse, une pièce longitudinale du cadre comportant à chaque fois un profilé à section en L dont une première branche est fixée sur le bossage central du rail de fixation et dont une deuxième branche perpendiculaire à la première branche forme une surface de bord latéral du cadre.

Selon un mode de réalisation, la pièce longitudinale du cadre comporte une nervure longitudinale faisant saillie en direction de la structure porteuse, le bossage central du rail de fixation comportant une rainure correspondante apte à recevoir la nervure avec un jeu latéral permettant un réglage de position latéral du panneau par rapport au rail de fixation.

Selon un mode de réalisation, le rail de fixation présente à chaque fois une forme symétrique par rapport à un plan longitudinal, le bossage central étant apte à recevoir une pièce longitudinale respective de deux panneaux agencés de part et d'autre du rail de fixation.

Selon un mode de réalisation, le dispositif comporte en outre un barre de couverture creuse présentant une portion centrale fixée sur le bossage central d'un rail de fixation et deux ailes latérales s'étendant depuis la portion centrale en direction des deux panneaux agencés de part et d'autre du rail de fixation, l'aile latérale comportant à chaque fois un rebord d'extrémité venant recouvrir la pièce longitudinale correspondante du panneau.

Selon un mode de réalisation, une plaque de fermeture est fixée sur la barre de couverture entre les deux rebords d'extrémité pour recouvrir de manière étanche la portion centrale de la barre de couverture.

Selon un mode de réalisation, le rail de fixation comporte un canal d'écoulement s'étendant longitudinalement à côté du bossage central pour guider un écoulement d'eau vers une extrémité du rail de fixation, le canal d'écoulement étant destiné à collecter des écoulements provenant des gouttières des deuxièmes pièces de bord des panneaux de la rangée.

Selon un mode de réalisation, la structure porteuse présente une inclinaison, les rails de fixation étant orientés dans le sens de la pente de la structure porteuse, les première et deuxième pièces de bord du cadre étant orientées sensiblement à l'horizontal. Le dispositif peut ainsi être utilisé pour recouvrir toute surface inclinée comme une toiture de bâtiment. Il peut aussi être utilisé pour recouvrir une surface verticale.

Une idée à la base de l'invention est de fournir un système de panneaux encadrés encastrables pouvant se fixer sur une structure porteuse telle qu'une charpente pour former des surfaces translucides telles que des verrières ou des surfaces de captage de la lumière solaire pour la production de chaleur et/ou d'électricité.

Certains aspects de l'invention partent de l'idée de fournir un système de fixation de panneaux sous la forme d'une ou plusieurs rangées de panneaux interconnectés, dans lequel une rangée de panneau est orientée dans la sens de la pente de la surface porteuse à recouvrir et fixée à la surface porteuse au moyen de deux rails de fixation parallèles. Certains aspects de l'invention partent de l'idée de créer une structure étanche au niveau de l'interconnexion entre le bord supérieur d'un premier panneau et le bord inférieur d'un deuxième panneau de la rangée, tout en proposant une structure relativement facile à assembler et à aligner.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

Sur ces dessins :
- La figure 1 est une vue d'ensemble en perspective d'un dispositif de couverture modulaire selon un mode de réalisation de l'invention.
- La figure 2 est une vue partielle en coupe transversale du dispositif de la figure 1 au niveau d'un rail de fixation.
- La figure 3 est une vue partielle en coupe du dispositif de la figure 1 au niveau d'une interconnexion entre deux panneaux selon un plan perpendiculaire au plan de coupe de la figure 2.
- Les figures 4 et 5 sont des sections de deux parties complémentaires du cadre des panneaux qui permettent d'interconnecter deux panneaux.

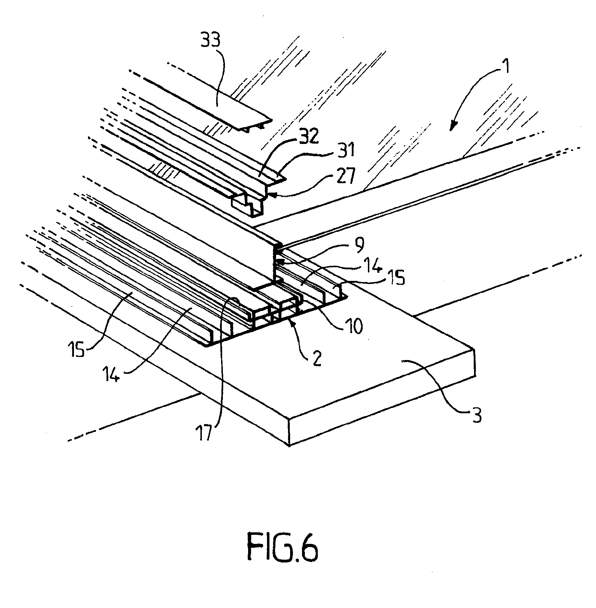

- La figure 6 est une vue partielle du dispositif de la figure 1 en perspective éclatée.

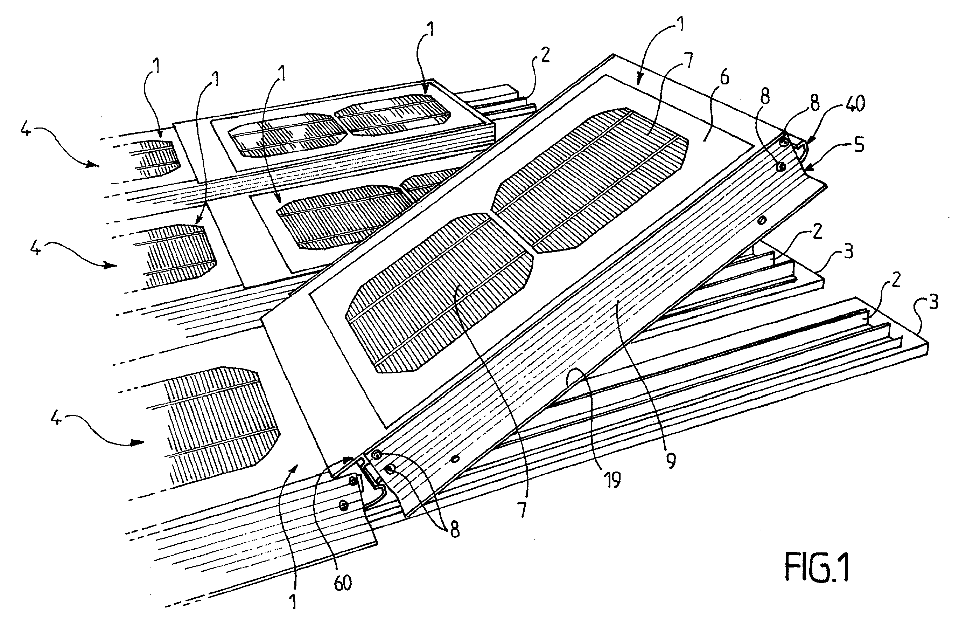

En référence à la figure 1, un dispositif de couverture modulaire représenté en perspective comporte des panneaux rectangulaires 1, dont l'un est représenté dans un état détaché du reste du dispositif par mesure de clarté. Le dispositif comporte des rails de fixation 2 qui sont fixés parallèlement les uns aux autres de manière équidistante sur une surface de support plane, par exemple le rampant d'un toit. Sur la figure 1, la surface de support est formée d'une pluralité de chevrons 3 alignés dans un plan et supportant chacun un rail de fixation 2. Bien que la surface de support paraisse horizontale sur la figure 1, celle-ci est préférentiellement inclinée de sorte que le haut de la feuille de dessin correspond à la partie la plus haute du dispositif et le bas de la feuille de dessin correspond à la partie la plus basse du dispositif. Les rails de fixation 2 sont préférentiellement parallèles à la ligne de plus grande pente.

Les panneaux 1 sont agencés sous la forme d'un nombre quelconque de rangées parallèles 4, la figure 1 montrant trois rangées de deux panneaux chacune à des fins d'illustration. Une rangée de panneaux 4 est fixée à chaque fois à cheval sur deux rails de fixation 2 adjacents, d'une manière qui sera décrite détaillée par la suite.

Comme visible sur la figure 1, un panneau 1 comporte un cadre 5 formé de quatre pièces assemblées par des vis 8 ou analogue et une plaque de verre 6 maintenue dans le cadre 5 par tout moyen approprié. Dans l'exemple de la figure 1, la plaque 6 recouvre des éléments photovoltaïques 7 qui sont également fixés dans le cadre 5 pour produire de l'électricité. En variante, le panneau 1 peut être conçu sous la forme d'un simple élément de verrière transparent, le cadre 5 ne contenant alors rien d'autre que des éléments transparents pour laisser passer la lumière entre les chevrons 3.

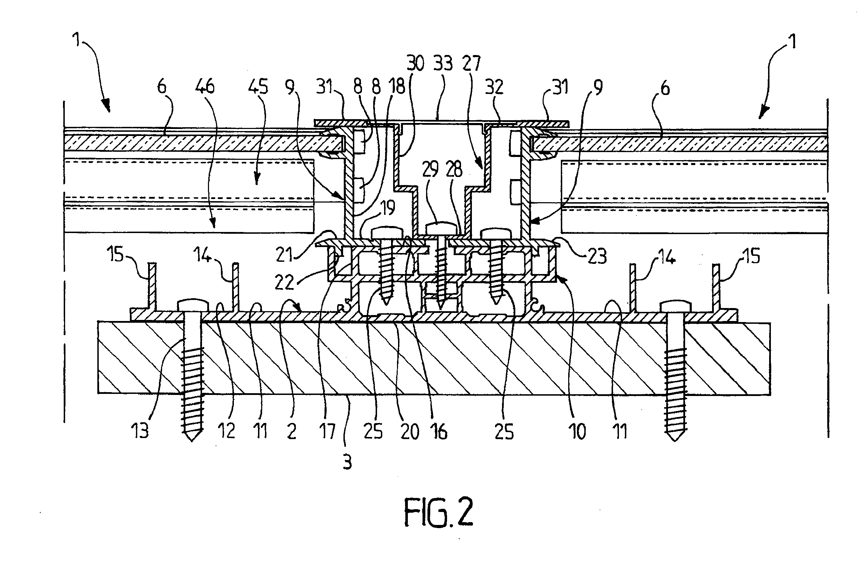

Sur la figure 2, le dispositif de couverture modulaire est représenté en coupe transversale au niveau d'un rail de fixation 2 à l'interface entre deux rangées de panneaux qui sont situées respectivement à droite et à gauche du rail de fixation 2. Les pièces du cadre 5 et les rails de fixation 2 sont ici des pièces profilées pouvant être fabriquées par extrusion de matière plastique ou de métal, par exemple en aluminium.

Le rail de fixation 2 comporte une plaque de base plane dont la surface inférieure 20 est en appui sur le chevron 3. Sur sa surface supérieure, cette plaque de base est divisée en cinq parties dans sa largeur : un bossage central 10, deux canaux d'écoulement 11 de part et d'autre du bossage 10 et deux portions de fixation 12 à l'extérieur des canaux d'écoulement 11. Les portions de fixation 12 sont percées à intervalles réguliers pour recevoir des organes de fixation, par exemple vis 13, permettant de fixer solidement le rail 2 sur la surface de support. Deux nervures 14 et 15 font saillie sur la plaque de base de part et d'autre de la portion de fixation 12 pour éviter l'infiltration d'eau en direction des perçages des vis 13. Le canal d'écoulement 11 défini à chaque fois entre la nervure 14 et le bossage 10 est dépourvu de perçages et peut donc conduire un écoulement d'eau le long de la ligne de pente jusqu'au bas du rail de fixation 2, qui débouche par exemple dans une gouttière de bord de toit ou analogue.

Le bossage central 10 comporte un surface supérieure 16 parallèle à la plaque de base du rail 2 et surélevée par rapport à celle-ci. Deux gorges longitudinales 17 sont formées sur les bords de la surface supérieure 16 pour faciliter le montage des panneaux 1, comme il va être expliqué maintenant.

La figure 2 montre la section des pièces longitudinales 9 du cadre 5 d'un panneau 1. La pièce 9 présente une section en L avec une aile 19 parallèle à la plaque de base du rail 2 et une aile 18 perpendiculaire à l'aile 19 définissant l'épaisseur du panneau 1. Un rebord 21 prolonge l'aile 19 de l'autre côté de l'aile 18 et présente un biseau 23 sur sa surface supérieure et une nervure longitudinale 22 sur sa surface inférieure opposée à l'aile 18. A l'état monté du dispositif, l'aile 19 du cadre 5 vient en appui sur la surface supérieure 16 du bossage 10 de manière que la nervure 22 s'engage longitudinalement dans la gorge 17 correspondante. Cet engagement permet de positionner les panneaux dans un état d'alignement dans lequel les pièces longitudinales 9 sont sensiblement parallèles aux rails de fixation 3, au jeu de montage près. La largeur de la gorge 17 est supérieure à la largeur de la nervure 22 de manière à ménager un jeu latéral du panneau 1 par rapport au rail 2, permettant de rattraper de légères imprécisions de positionnement des rails 2 les uns par rapport aux autres et des tolérances dimensionnelles des panneaux 1. Le panneau 1 est fixé sur les rails 2 au moyen d'organes de fixation, par exemple vis 25, engagés à travers les ailes 19 du cadre dans des perçages correspondant du bossage 10. Le biseau 23 est alors positionné au droit d'un canal d'écoulement 11 de manière à favoriser l'évacuation de toute infiltration d'eau qui atteindrait le rebord 21 vers le canal 11.

Afin d'améliorer l'étanchéité du dispositif au niveau du rail 2, notamment de limiter la possibilité pour l'eau de s'infiltrer au niveau des vis de fixation 8 et 25, une barre de couverture 27 est ensuite montée sur le bossage 10 du rail 2 de manière à chevaucher les pièces longitudinales 9 des panneaux de chaque côté du rail 2. La barre 27 comporte une base 28 qui prend appui longitudinalement au milieu du bossage 10 où elle est fixée par des organes de fixation 29 en prenant en sandwich les extrémités des ailes 19 des panneaux, des parois latérales 30 qui s'élèvent en escalier de part et d'autre de la base 28 sur une distance correspondant à l'épaisseur du panneau 1 et des rebords externes 31 parallèles à la base 28. A l'état monté, le rebord externe 31 recouvre la pièce longitudinale 9 du panneau et se termine au droit de la plaque de verre 6 du panneau.

Pour limiter les risques d'infiltration d'eau au niveau de la base 28 et des vis 29, un capot allongé 33 est encliqueté dans la barre de couverture 27 entre les parois latérales 30. Des lamages 32 sur les rebords externes 31 permettent d'accueillir le capot 33 sans surépaisseur au niveau de la surface extérieure du dispositif de couverture.

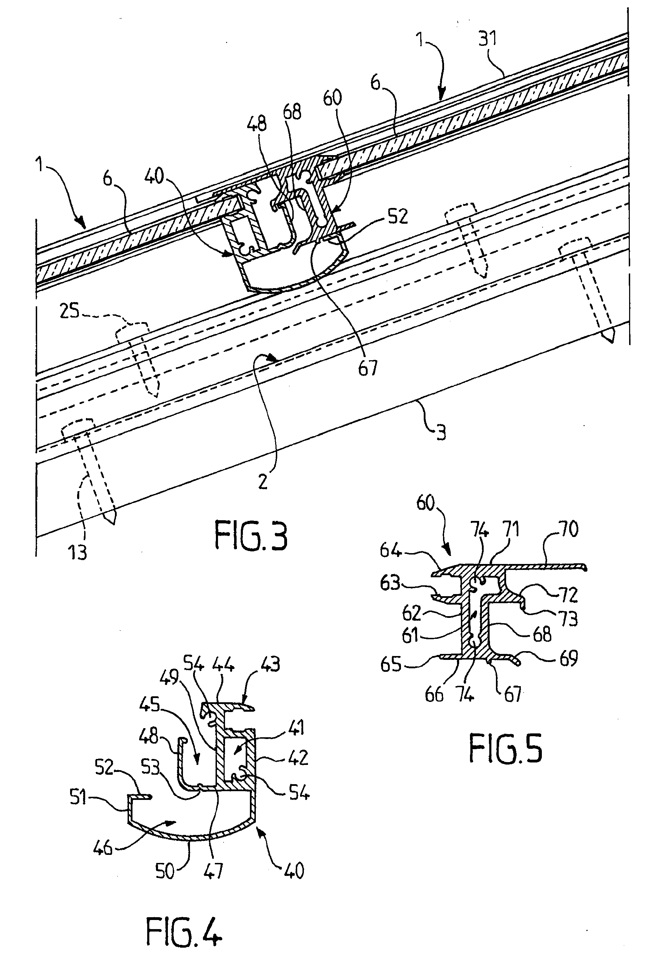

En référence aux figures 3 à 5, on va maintenant décrire la structure de l'assemblage des panneaux successifs d'une même rangée 4. Les figures 4 et 5 représentent respectivement la section d'une pièce transversale supérieure 40 et d'une pièce transversale inférieure 60 du cadre 5 d'un panneau 1. La pièce transversale supérieure 40 est destinée à être orientée du côté le plus élevé du panneau 1 et la pièce 60 du côté le plus bas, comme illustré sur la figure 3. Sur la figure 3, on voit la section transversale de l'interface entre deux panneaux 1 d'une rangée 4 dans un plan de coupe parallèle aux rails de fixation 2 et situé à mi-distance entre deux rails 2. Sur la figure 3, le profil des pièces 40 et 60 est vu dans un sens opposé par rapport aux figures 4 et 5.

La pièce supérieure 40 comporte une poutre centrale 41 à section rectangulaire creuse, destinée à conférer une rigidité suffisante au cadre 5. La paroi 42 de la poutre 41 tournée vers l'intérieur du cadre est plane et est surmontée d'un étrier 43 destiné à recevoir le bord de la plaque de verre 6 de manière serrée et étanche. Un joint en polymère non représenté peut être prévu à ce niveau sur la plaque de verre 6 pour améliorer l'étanchéité. La surface supérieure 44 de l'étrier 43 est plane et s'incline en biseau vers la plaque de verre 6 du côté intérieur du cadre.

Du côté de la poutre centrale 41 tourné vers l'extérieur du cadre 5, la pièce supérieure 40 comporte deux gouttières superposées 45 et 46. La gouttière supérieure 45 présente une paroi de fond 47 dans le prolongement de la surface inférieure de la poutre 41 et une paroi de côté 48 qui s'étend perpendiculairement à la paroi de fond 47 et parallèlement au côté 49 de la poutre centrale 41.

La gouttière inférieure 46 est attachée à la poutre centrale 41 à la base de la paroi 42 et présente une paroi de fond incurvée 50 qui s'étend sur toute la largeur de la poutre 41, de la gouttière supérieure 45 et se prolonge au-delà de la gouttière supérieure 45 par une paroi de côté 51 parallèle à la paroi de côté 48 de la gouttière supérieure 45. Un rebord plat 52 termine la paroi de côté 48 en rentrant vers l'intérieur de la gouttière 46 parallèlement à la paroi de fond 47 de la gouttière supérieure 45. Un espace subsistant entre le bout rebord plat 52 et la gouttière supérieure 45 permet que de l'eau puisse pénétrer dans la gouttière 46 en cas d'infiltration dans cette zone. La position de la paroi de côté 48 de la gouttière supérieure 45 au dessus de la gouttière 46 permet de récupérer dans la gouttière 46 un éventuel écoulement résultant d'un débordement de la gouttière supérieure 45. La paroi de fond 47 de la gouttière supérieure 45 présente un relief 53 favorisant le décrochement de l'eau au droit du milieu de la gouttière 46.

Pour l'assemblage de la pièce supérieure 40 aux pièces longitudinales 9 du cadre, des logements de réception 54 pour les vis 8 sont prévus au-dessus de la gouttière 45 et à l'intérieur de la poutre centrale 41.

La pièce inférieure 60 comporte une poutre centrale 61 à section creuse en L, destinée à conférer une rigidité suffisante au cadre 5. La paroi 62 de la poutre 61 tournée vers l'intérieur du cadre porte un étrier saillant 63 destiné à recevoir le bord de la plaque de verre 6 de manière serrée et étanche. Un joint en polymère non représenté peut être prévu à ce niveau sur la plaque de verre 6 pour améliorer l'étanchéité. La surface supérieure 64 de l'étrier 63 s'incline en biseau vers la plaque de verre 6 du côté intérieur du cadre. Du côté opposé à l'étrier 63, la paroi 62 porte une nervure saillante 65 dont la surface inférieure prolonge la surface inférieur de la poutre 61 pour former une surface d'appui plane étendue 66 destinée à venir en appui sur le rebord plat 52 de la pièce 40 dans l'état assemblé des panneaux. La surface d'appui 66 porte une nervure 67 parallèle à la longueur de la pièce 60 au droit de la paroi 68 de la poutre 61 tournée vers l'extérieur du cadre 5. La surface 66 se prolonge de l'autre côté de la nervure 67 vers l'extérieur du cadre 5 par une ailette saillante 69 sensiblement parallèle à la nervure 67 et dont l'extrémité s'incurve vers le bas.

La deuxième branche du L de la poutre 61 s'étend vers l'extérieur du cadre 5 en saillie au dessus de la paroi 68 et se prolonge sur un côté supérieur par une fine plaque de recouvrement 70 et sur un côté inférieur par une nervure crochue 72. La plaque de recouvrement 70 se situe dans l'alignement de la surface supérieur 71 de la poutre 61 et fait saillie sur une grande longueur vers l'extérieur du cadre 5 pour venir en recouvrement sur la totalité de la pièce supérieure 40 dans l'état assemblé des panneaux. La nervure crochue 72 se termine par un bec 73 destiné à s'engager dans la gouttière supérieure 45 de la pièce 40 dans l'état assemblé des panneaux.

Pour l'assemblage de la pièce inférieure 60 aux pièces longitudinales 9 du cadre, des logements de réception 74 pour les vis 8 sont prévus à l'intérieur de la poutre centrale 61.

Le montage du dispositif va maintenant être expliqué. Il commence par la mise en place des rials de fixation 2 sur la surface de support avec des écartements adaptés à la larguer des panneaux 1 à fixer. Ensuite, les panneaux 1 d'une rangée 4 sont mis en place les uns après les autres en partant du bas de la pente. A chaque fois, la mise en place du panneau 1 est facilitée par l'insertion des nervures 22 dans les gorges 17 des rails 2. Le premier panneau est fixé en position à l'aide des vis 25. La mise en place du deuxième panneau et des suivants, le cas échéant, suppose à chaque fois d'engager la pièce inférieure 60 du deuxième panneau avec la pièce supérieure 40 du premier panneau déjà en place. Pour cela, le deuxième panneau est incliné comme montré sur la figure 1 pour que :
- L'ailette 69 de la pièce 60 pénètre dans la gouttière 46 de la pièce 40;
- La nervure crochue 72 de la pièce 60 pénètre dans la gouttière 45 de la pièce 40 ; et
- Le bout de la plaque de recouvrement 70 vienne en appui sur la surface supérieure 44 de la pièce 40.

A partir de cette position, le deuxième panneau est pivoté par rapport au premier panneau jusqu'à la position alignée des deux panneaux montrée sur la figure 3.

Dans cette position alignée et engagée :
- la surface 66 de la pièce 60 est en appui sur le rebord plat 52 de la pièce 40 ;
- la plaque de recouvrement 70 est en appui sensiblement à plat sur la surface supérieure 44 de la pièce 40 ;
- la nervure 67 est engagée dans la gouttière 46 ; et
- la nervure crochue 72 de la pièce 60 est engagée dans la gouttière 45 de la pièce 40.

Le double appui de la surface 66 sur le rebord plat 52 et de la plaque de recouvrement 70 sur la surface supérieure 44 fournit un guidage coulissant à plat de la pièce inférieure 60 du deuxième panneau par rapport au premier panneau dans le sens longitudinal des rails 2. Ce guidage permet de régler précisément l'espacement des panneaux dans le sens longitudinal entre une position d'écartement maximal, définie par la venue en butée de la nervure 67 contre l'arête du rebord 52, et une position de rapprochement maximal, définie par la venue en butée de la paroi 48 de la pièce 40 contre la paroi 68 de la pièce 60.

Dans toutes les positions de réglage possibles entre ces deux positions de butée, l'étanchéité de l'interface entre les deux panneaux est assurée en premier lieu par la plaque de recouvrement 70 qui recouvre complètement la pièce supérieure 40 et peut donc guider l'eau provenant des portions supérieures de la rangée de panneau 4 par dessus la pièce 40 jusqu'à la plaque de verre 6 du panneau 1 suivant. Toutefois, les éventuelles infiltrations d'eau entre les pièces 60 et 40 par capillarité sont guidées vers la gouttière supérieure 45 et la gouttière inferieure 46 pour être évacuées sur les bords des panneaux vers les rails de fixation 2. Comme visible sur la figure 1, les extrémités des gouttières 45 et 46 arrivent à chaque fois au droit du canal d'écoulement 11 du rail 2, de manière à évacuer les infiltrations d'eau de manière fiable. Comme visible sur la figure 3, la nervure crochue 72 de la pièce 60 forme une chicane qui guide l'eau d'infiltration directement dans la gouttière supérieure 45, le bec 73 favorisant le décrochement de l'écoulement. La fourniture de deux gouttières dans la pièce supérieure 40 est une sécurité supplémentaire dans la mesure où la gouttière supérieure 45 peut déborder dans la gouttière inférieure 46 de plus grande section en cas d'infiltration abondante.

Une fois bien positionné par rapport au premier panneau, le deuxième panneau est fixé en position avec des vis 25. Une fois les rangées de panneaux 4 terminées, la barre 27 et le capot 33 sont finalement mis en place.

Dans le cas d'une installation photovoltaïque, le câblage électrique des panneaux 1 peut être disposé dans les portions 12 des rails de fixation 2, de manière à ne pas interférer avec l'évacuation de l'eau d'infiltration.

De la même manière, il est possible d'inclure dans le dispositif différents types de panneaux 1, par exemple pour réaliser des portions de couverture translucides, des portions de couverture opaques, par exemple avec des panneaux dont le cadre contient une plaque d'aluminium à la place de la plaque de verre, des portions de couverture photovoltaïques, des portions de couverture solaires thermiques pour absorber la chaleur, et/ou des portions réfléchissantes.

Selon des variantes de réalisation, les panneaux 1 peuvent présenter d'autres géométries à quatre côtés, par exemple une forme de carré, de losange ou de parallélogramme.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs moyens ou modules peuvent être représentés par un même élément matériel.

Dans les revendications, tout signe de référence entre parenthèses ne saurait être interprété comme une limitation de la revendication.

## Revendications

1. Dispositif de couverture modulaire, notamment pour la couverture d'un toit, comportant
des rails de fixation (2) espacés parallèles fixés sur une structure porteuse (3) à couvrir,
et des panneaux collecteurs de lumière (1) agencés sous la forme d'au moins une rangée de panneaux (4) montée entre deux rails de fixations, un panneau comportant à chaque fois un cadre quadrilatère (5) et une plaque collectrice de lumière (6) fixée de manière étanche dans le cadre, le cadre comportant à chaque fois
deux pièces longitudinales (9) agencées parallèlement aux rails de fixation et aptes à être fixées respectivement aux deux rails de fixation (2) associés à la rangée de panneaux,
une première pièce de bord (60) reliant les deux pièces longitudinales au niveau d'une première extrémité des pièces longitudinales, et
une deuxième pièce de bord (40) reliant les deux pièces longitudinales au niveau d'une deuxième extrémité des pièces longitudinales,
dans lequel la première pièce de bord (60) comporte à chaque fois une plaque de recouvrement (70) agencée à l'opposé de la structure porteuse (3) et faisant saillie vers l'extérieur du cadre parallèlement à la plaque collectrice (6), et
la deuxième pièce de bord (40) comporte à chaque fois une surface d'appui (44) destinée à recevoir la plaque de recouvrement d'un deuxième panneau de la rangée de panneaux, de manière que la plaque de recouvrement (70) du deuxième panneau (1) recouvre la deuxième pièce de bord (40) du premier panneau (1) dans un état d'alignement des deux panneaux de la rangée de panneaux (4),
dans lequel la deuxième pièce de bord (40) comporte une gouttière (45, 46) faisant saillie vers l'extérieur du cadre (5), la gouttière présentant un côté ouvert tourné à l'opposé de la structure porteuse pour collecter une infiltration ou une condensation d'eau entre les deux pièces de bord, la longueur de la gouttière s'étendant jusqu'aux deux rails de fixation (2) associés à la rangée de panneaux pour pouvoir déverser l'eau collectée sur les rails de fixation,
**caractérisé par le fait que** la deuxième pièce de bord (40) comporte une gouttière secondaire (45) agencée parallèlement à la première gouttière (46) à un niveau intermédiaire entre la première gouttière et la surface d'appui (44) de la deuxième pièce de bord, la gouttière secondaire comportant une ouverture tournée à l'opposé de la structure porteuse pour collecter une infiltration ou une condensation d'eau entre les deux pièces de bord et un rebord de débordement (48) agencé au droit de l'ouverture de la première gouttière pour permettre un débordement d'eau depuis la gouttière secondaire (45) dans la première gouttière (46), la longueur de la gouttière secondaire (45) s'étendant jusqu'aux deux rails de fixation (2) associés à la rangée de panneaux pour pouvoir déverser l'eau collectée sur les rails de fixation.

2. Dispositif selon la revendication 1, dans lequel une paroi de fond (47) de la gouttière secondaire (45) présente un relief (53) favorisant le décrochement de l'eau au droit du milieu de la première gouttière (46).

3. Dispositif selon la revendication 1 ou 2, dans lequel la première pièce de bord et la deuxième pièce de bord comportent des moyens de butée complémentaires (52, 67; 48, 68) délimitant un jeu longitudinal de coulissement du deuxième panneau par rapport au premier panneau, les moyens de butée définissant une position de rapprochement maximal et une position d'éloignement maximal des panneaux dans l'état d'alignement des deux panneaux.

4. Dispositif selon la revendication 3, dans lequel la gouttière (46) de la deuxième pièce de bord comporte un rebord plat (52) tourné à l'opposé de la structure porteuse et parallèle à la surface d'appui (3), la première pièce de bord comportant une surface d'appui (66) tournée vers la structure porteuse apte à venir en appui sur le rebord plat dans l'état d'alignement des deux panneaux (1), la surface d'appui de la première pièce de bord portant une nervure saillante (67) parallèle à la gouttière (46) qui est engagée dans la gouttière dans l'état d'alignement des deux panneaux, la nervure étant apte à coopérer avec le rebord plat (52) de la gouttière pour définir une position d'éloignement maximal des panneaux dans l'état d'alignement des deux panneaux.

5. Dispositif selon la revendication 3 ou 4, dans lequel la première pièce de bord (60) comporte en outre deux parois parallèles espacées (69, 72) faisant saillie vers l'extérieur du cadre en-deçà de la plaque de recouvrement (70) et définissant une gorge apte à recevoir le rebord de débordement (48) de la gouttière secondaire dans l'état d'alignement des deux panneaux, le rebord de débordement (48) de la gouttière secondaire étant apte à venir en butée au fond de la gorge (68) de la première pièce de bord dans une position de rapprochement maximal des deux panneaux (1).

6. Dispositif selon la revendication 5, dans lequel les deux parois parallèles de la première pièce de bord se terminent respectivement par un bec incliné (69, 73) venant au droit respectivement de l'ouverture de la première gouttière (46) et de l'ouverture de la gouttière secondaire (45) de la deuxième pièce de bord dans l'état d'alignement des deux panneaux.

7. Dispositif selon l'une des revendications 1 à 6, dans lequel un rail de fixation (2) comporte à chaque fois un côté plan prenant appui sur la structure porteuse (3) et un bossage central (10) faisant saillie sur le côté opposé à la structure porteuse, une pièce longitudinale (9) du cadre comportant à chaque fois un profilé à section en L dont une première branche (19) est fixée sur le bossage central (10) du rail de fixation et dont une deuxième branche (18) perpendiculaire à la première branche forme une surface de bord latéral du cadre (5), la pièce longitudinale du cadre comportant une nervure longitudinale (22) faisant saillie en direction de la structure porteuse, le bossage central (10) du rail de fixation comportant une rainure correspondante (17) apte à recevoir la nervure (22) avec un jeu latéral permettant un réglage de position latéral du panneau par rapport au rail de fixation.

8. Dispositif selon la revendication 7, dans lequel le rail de fixation (2) présente à chaque fois une forme symétrique par rapport à un plan longitudinal, le bossage central (10) étant apte à recevoir une pièce longitudinale respective (9) de deux panneaux agencés de part et d'autre du rail de fixation.

9. Dispositif selon la revendication 8, comportant en outre un barre de couverture (27) creuse présentant une portion centrale (28) fixée sur le bossage central d'un rail de fixation et deux ailes latérales (30) s'étendant depuis la portion centrale en direction des deux panneaux (1) agencés de part et d'autre du rail de fixation, l'aile latérale comportant à chaque fois un rebord d'extrémité (31) venant recouvrir la pièce longitudinale correspondante (9) du panneau, une plaque de fermeture (33) étant fixée sur la barre de couverture (27) entre les deux rebords d'extrémité pour recouvrir de manière étanche la portion centrale de la barre de couverture.

10. Dispositif selon l'une des revendications 7 à 9, dans lequel le rail de fixation (2) comporte un canal d'écoulement (11) s'étendant longitudinalement à côté du bossage central (10) pour guider un écoulement d'eau vers une extrémité du rail de fixation, le canal d'écoulement étant destiné à collecter des écoulements provenant des gouttières (45, 46) des deuxièmes pièces de bord des panneaux de la rangée.

11. Dispositif selon l'une des revendications 1 à 10, dans lequel la structure porteuse (3) présente une inclinaison, les rails de fixation (2) étant orientés dans le sens de la pente de la structure porteuse, les première et deuxième pièces de bord (40, 60) du cadre étant orientées sensiblement à l'horizontal.
